# EUROPEAN PATENT APPLICATION

(11) **EP 2 658 211 A1**
(43) Date of publication of application: **30.10.2013**
(21) Application number: 12165538.5
(22) Date of filing: 25.04.2012
(51) Int. Cl.: H04L 29/08, H04W 4/02, G01C 21/00

(54) **Method and apparatus for managing downloading of data to a user's mobile device which is travelling along a travel route**

(71) Applicant: Hitachi Ltd., Tokyo 100-8280 (JP)
(72) Inventor: Mariyasagayam, Marie Nestor, 06600 Antibes (FR); Lan, Lin, 06400 Cannes (FR)
(74) Representative: MERH-IP Matias Erny Reichl Hoffmann

(57) **Abstract**

The present invention relates to a method and an apparatus for managing downloading of data to a user's mobile device which is travelling along a travel route (R), the mobile device downloading data via a communication network comprising a plurality of access points (10A, 10B). A group of access points being located along the travel route is identified and, for each identified access point, an associated covered route segment of the travel route corresponding to the part of the travel route which is covered by a coverage area (CS1-CS5) of the respective access point is determined. For each covered route segment, an estimated segment travel time of the mobile device along the respective covered route segment is determined and a data volume to be provided to the mobile device for download when being located on the respective covered route segment is determined on the basis of the estimated segment travel time. Then, when the mobile device is located on a specific covered route segment of the covered route segments, the data volume determined for the specific covered route segment is provided to the mobile device for download via the access point being associated with the specific covered route segment.

## Description

The present invention relates to a method and an apparatus for managing downloading of data to a user's mobile device which is travelling along a travel route.

### Background of the invention

Nowadays, it has become popular to use thin client services (i.e. server-based services executed on a user-side device), wherein applications on a user's mobile device (i.e. the thin-client device) depend on data sent from a server and/or processing executed on a server. Such thin client services may include even navigation and telematics services in which the navigation services are provided by a server and navigation data such as, for example, navigational map data are communicated to the user's mobile device based on quasi-continuous connectivity for the exchange of data between the user's mobile device and a service centre comprising one or more servers. The user's mobile device can be rendered as a portable user's mobile device such as a portable computer, a tablet computer, a mobile phone, a smart phone or as an in-vehicle device which is mounted or at least mountable to a vehicle.

The quasi continuous connectivity is typically required for constant communication between the mobile device using the navigation service and a server that provides the service so as to enable the mobile device to receive data content from the server without any disruption. However, especially for Thin-client navigation services, it has to be considered that the mobile device is traveling on the travel route, wherein the mobile device may need map data of all areas being located along the travel route that need to be displayed to the user. However, it may further be considered that the mobile device can have limited available data memory space so that, for example, the map data of all areas along the travel route cannot be provided to the mobile device due to limited storage.

US 2003/0236818 A1 shows a method for providing downloadable navigation data in connection with Thin-client navigation services according to which the service center server calculates the travel route and transmits the data associated with the calculated travel route to the client device. Before transmitting the data, the service center server makes a determination whether the size of the data associated with the calculated travel route is greater than the memory limit of the memory means in the client device. If so, the data is not provided as a whole for download by the client device but it is provided as a plurality of segmented data files at different times, while the client device is traveling along the travel route.

US 2009/0326810 A1 proposes a method to estimate the network connectivity status along the planned travel route of a vehicle calculated by a navigation system, and if the network connectivity is expected to be under a certain threshold at a certain location of the route, the server will cache a map tile of this location before the user enters the area around the location, i.e. the corresponding map data will be provided for download by the user's mobile device prior to arriving the location for which it has been estimated that the network connectivity is expected to be under the threshold.

In view of the above, it is an object of the present invention to provide a method and an apparatus for managing downloading of data to a user's mobile device which is travelling along a travel route which allows to improve the communication between the server-side and the user-side along the travel route and which allows to provide a reliable and efficient exchange of data between the server-side and the user-side when a user having a user's mobile device is traveling along the travel route, in particular in connection with server-based thin client navigation and telematics services.

### Summary of the invention

In view of the above-described objects of the present invention, a method for managing downloading of data to a user's mobile device which is travelling along a travel route according to claim 1, an apparatus for managing downloading of data to a user's mobile device which is travelling along a travel route according to claim 14, and a computer program product according to claim 15 are proposed. Dependent claims relate to preferred embodiments of the present invention.

According to a first object of the present invention, there is proposed a method for managing downloading of data to a user's mobile device which is travelling along a travel route.

According to embodiments of the present invention, the travel route may, for example, be determined on the basis of a route start position, a route destination position and navigation data, e.g. in case the user has manually set a route destination position for navigation purposes, e.g. for navigation route calculation. Then, the route start position can also be set manually by the user, or it may simply be represented by a current position of the vehicle (or a mobile device) determined by a position determining means, e.g. by means of a satellite positioning system.

Determining a travel route being determined on the basis of a route start position, a route destination position and navigation data is well-known in the prior art. Here, navigation data may comprise navigation map data and optionally may also indicate public points of interest such as e.g. sightseeing spots, tourist attractions, landmarks, theatres, cinemas, museums, public buildings, stations or the like, and it may also indicate a user subscription status to one or more navigation services and user's preferences or user's configuration data indicating user's preferred places such as e.g. points of interest, shops, restaurants etc.

In other embodiments of the invention, in the absence of a route destination position set by the user, the travel route can also be determined on the basis of a current position of the vehicle/mobile device and expected road segments to be travelled by the vehicle/mobile device in the near future, e.g. when the vehicle/mobile device is currently located on a specific road, the travel route can be represented by a travel route from the current position along the specific road up to one of the next intersections of the specific road (e.g. the next intersection), where the vehicle has the opportunity to leave the specific road and turn to another road, or up to one of the next road exits (e.g. the next exit) where the vehicle has the first opportunity to exit the specific road, e.g. in case the specific road is a highway or the like.

The mobile device is configured to download data via a communication network comprising a plurality of access points, wherein each access point is configured for enabling downloading data to the mobile device via the communication network when the mobile device is located in a coverage area of the respective access point, in particular when the mobile device is located in a coverage area of the respective access point while travelling along the travel route.

According to the first aspect of the invention, the method comprises identifying a group of access points of the plurality of access points being located along the travel route and determining, for each identified access point, an associated covered route segment of the travel route corresponding to the part of the travel route which is covered by the coverage area of the respective access point. For example, the group of access points can be determined on the basis of access point data indicating the positions of the plurality of access points.

According to the first aspect of the invention, the method further comprises determining, for each determined covered route segment, an estimated segment travel time of the mobile device along the respective covered route segment of the travel route. Furthermore, the method comprises determining, for each covered route segment, a data volume to be provided to the mobile device for download when being located on the respective covered route segment on the basis of the estimated segment travel time determined for the respective covered route segment.

Then, when the mobile device is located on a specific covered route segment of the covered route segments, the method further comprises providing the data volume determined for the specific covered route segment to the mobile device for download via the access point being associated with the specific covered route segment. The method may further comprise downloading the data volume determined for the specific covered route segment to the mobile device, including transmitting the data volume to the mobile device via one or more of the access points and/or receiving the data volume at the mobile device.

In contrast to the prior art, the present invention advantageously considers not only the connectivity to access points located along the travel route but additionally allows to consider the time period in which the mobile device is expected to be communicably connected to the access points. In particular, the invention proposes to consider the length of a route segment of the travel route which is covered by a coverage area of an access point.

The underlying idea is that determining the length of a route segment of the travel route which is covered by a coverage area of an access point allows to estimate the expected travel time of the mobile device along the route segment which can be expected as corresponding to the time period the mobile device will be able to communicably connect to that access point. Then, the size of the data volumes to be provided to the mobile device via that access point can be conveniently adapted on the basis of the estimate of the expected travel time of the mobile device along the route segment corresponding to the time of expected communication with that access point. Accordingly, it is advantageously made possible to adapt the data volumes to be provided for download and the data size thereof on the basis of reliable estimates of connection time to certain access points.

According to a preferred aspect, the data volumes for covered route segments are determined such that a data size of the data volumes is depending on the estimated segment travel times. For example, at least if other potential contributing factors such as cost rates and/or download rates are the same for different route segments, a larger estimated segment travel time may lead to a larger data size of the respective determined data volume and a smaller estimated segment travel time may lead to a smaller data size of the respective determined data volume.

This provides the advantage that the data volumes can be more adequately adapted to the coverage areas of the access points and the route segments of the travel route. In particular, larger data volumes can be advantageously provided for download to the mobile device in case the estimated travel time corresponding to an expected connection time to a certain access point is larger and smaller data volumes can be advantageously provided for download to the mobile device in case the estimated travel time corresponding to an expected connection time to a certain access point is smaller.

According to a preferred aspect, although the estimated travel times could be determined only on the basis of a length of the corresponding route segments and a pre-set average speed which may be set according to the type of the road, the estimated segment travel time for a respective covered route segment is preferably determined on the basis of traffic information data indicating real-time traffic information and/or statistical traffic information about the respective covered route segment. Alternatively or in addition, the estimated segment travel time for a respective covered route segment may be determined on the basis of a current travelling speed of the mobile device.

This has the advantage that the estimate of the estimated travel times can be made more reliable since the estimate can be based on further valuable information such as e.g. traffic information (real-time and/or statistical) which may indicate a more reliable estimate for average speeds of certain route segments or even current influences such as potential or real traffic jams on the corresponding route segment and/or on the basis of a current speed of the mobile device (which may be determined by a speed measurement device of a vehicle or on the basis of position monitoring over time e.g. by means of satellite navigation services). Then, due to the increased reliability of the determination of the estimated travel times, the data volumes can be even more adequately adapted to the coverage areas of the access points and the route segments of the travel route.

According to a preferred aspect, the method further comprises determining, for each identified access point, an available data download rate for downloading data to the mobile device from the respective access point, wherein the data volume to be provided to the mobile device for download when being located on the respective covered route segment is preferably determined on the further basis of the available data download rate determined for the access point being associated with the respective covered route segment.

This aspect makes it possible to further improve the provision of data volumes on the basis of available data download rate provided by the access points, wherein available data download rates can be depending on access technologies as well as on bandwidth. According to this aspect, it is advantageously made possible to determine the data volumes on the basis of a consideration of the estimated maximum data amount that can be downloaded via a certain access point which can be determined based on the product of the determined available data download rate of the access point times the estimated travel time corresponding to the route segment being covered by that access point. The aspect makes it advantageously further possible to avoid providing too much or too less data while the mobile device is located on a certain route segment. Accordingly, the data volumes can be even more adequately adapted to the coverage areas of the access points and the route segments of the travel route.

According to a preferred aspect, the data volumes for covered route segments are determined such that a data size of the data volumes is depending on the available data download rates. For example, at least if other potential contributing factors such as the estimated travel times and/or cost rates are the same for different route segments, a larger available data download rate may lead to a larger data size of the respective determined data volume and a smaller available data download rate may lead to a smaller data size of the respective determined data volume. This makes it advantageously possible to provide more data for download in case the available download rate is high and to provide less data for download in case the available download rate is low. Accordingly, the data volumes can be even more adequately adapted to the coverage areas of the access points and the route segments of the travel route.

According to a preferred aspect, the method further comprises determining, for each identified access point, a download cost rate for downloading data from the respective access point to the mobile device when the mobile device is located in the coverage area of the respective access point while travelling along the travel route, wherein the data volume to be provided to the mobile device for download when being located in the coverage area of the respective access point is preferably determined on the further basis of the download cost rate determined for the respective access point.

This aspect makes it possible to further improve the provision of data volumes on the basis of download cost rates for the access points, wherein download cost rates can be depending on access technologies as well as on the provider of the access point. As a significant advantage for the user, considering additionally the download cost rates of the different access point according to the above aspect makes it possible to additionally adapt the data volumes under the premise to significantly reduce costs occurring for the user along the travel route in that the same total data amount can be provided such that downloading the data amount along the travel route via plural access points occurs at low cost for the user.

Further preferably, the data volumes for covered route segments are determined such that a data size of the data volumes is depending on the download cost rates. For example, at least if other potential contributing factors such as estimated travel times and/or download rates are the same for different route segments, a larger download cost rate may lead to a smaller data size of the respective determined data volume and a smaller download cost rate may lead to a larger data size of the respective determined data volume. This makes it advantageously possible to provide more data for download in case the download cost rate is low and to provide less data for download in case the download cost rate is high. Accordingly, the data volumes can be even more adequately adapted to the coverage areas of the access points and the route segments of the travel route under the premise to additionally reduce significantly the occurring communication costs for the user.

According to a preferred aspect, the plurality of access points comprises access points of different communication technologies, wherein an available download rate and/or a download cost rate for downloading data to the mobile device when the mobile device is located in the coverage area of the respective access points while travelling along the travel route may be different for access points of different communication technologies. In such scenarios, considering the available download rates and/or the download cost rates as mentioned with respect to preferred aspects above becomes even more beneficial for the user.

According to a preferred aspect, the plurality of access points comprises access points managed by different communication providers, wherein an available download rate and/or a download cost rate for downloading data to the mobile device when the mobile device is located in the coverage area of the respective access points while travelling along the travel route may be different for access points having different communication providers. In such scenarios, considering the available download rates and/or the download cost rates as mentioned with respect to preferred aspects above becomes even more beneficial for the user.

According to a preferred aspect, the method further comprises determining, for each determined covered route segment, a download control coefficient on the basis of the estimated segment travel time for the respective covered route segment. Preferably, the data volume to be provided to the mobile device for download when being located in the coverage area of the respective access point is determined on the basis of the download control coefficient determined for the respective access point associated with the respective covered route segment.

Further preferably, the data volume to be provided to the mobile device for download when being located on a first covered route segment is determined on the basis of a comparison of the download control coefficient determined for the first covered route segment and the download control coefficient determined for a second covered route segment which is subsequent to the first covered route segment. This provides the advantage that it becomes possible to dynamically determine the data volumes on the basis of download control coefficients being determined for adjacent route segments and on the basis of a comparison thereof which helps to simplify processing and reduces the processing burden at the server side.

According to a preferred aspect, each download control coefficient is determined according to a function which decreases with increasing segment travel time, which decreases with increasing available data download rate and/or which increases with increasing download cost rate, wherein a higher amount of downloadable data is preferably provided when the mobile device is located on a covered route segment having a lower download control coefficient compared to when the mobile device is located on a covered route segment having a higher download control coefficient.

Obtaining the similar result and being technically substantially equivalent, it is also possible to determine each download control coefficient according to a function which increases with increasing segment travel time, which increases with increasing available data download rate and/or which decreases with increasing download cost rate, wherein a lower amount of downloadable data is preferably provided when the mobile device is located on a covered route segment having a lower download control coefficient compared to when the mobile device is located on a covered route segment having a higher download control coefficient.

The above aspects have the advantage that the factors of the estimated travel times, the download cost rates and/or the available download rates can be conveniently, efficiently, reliably and simultaneously considered in the determination of the data volumes on the basis of a common function of the estimated travel times, the download cost rates and/or the available download rates.

Summarizing the choice of the above functions, the data volumes can be conveniently determined such that the data size increases for increasing estimated travel times if download cost rates and/or the available download rates remain constant, the data size decreases for increasing download cost rates if estimated travel times and/or the available download rates remain constant, and the data size increases for increasing available download rates if download cost rates and/or the estimated travel times remain constant. Furthermore, in case two or more of the estimated travel times, the download cost rates and the available download rates changes, the data size of the data volumes can still be appropriately adapted under consideration of time and download rate of the connectivity and the occurring costs.

According to a preferred aspect, the data volumes comprise navigation map data for displaying a navigation map image on a display unit of the mobile device.

Further preferably, the data volume for a respective covered route segment is determined such that it at least comprises basic map data for the respective covered route segment, preferably especially if not downloaded already in order to avoid double downloading of the same data. Accordingly, the data volumes can be determined such that a minimum required data amount is provided, if not downloaded previously, namely a basic map data volume which may comprise basic map information without additional non-essential information such as e.g. information on points of interest, restaurants, shops, 3D-map data or the like.

Further preferably, the data volume for a respective covered route segment having a low corresponding estimated travel time, a low corresponding available data download rate and/or a high download cost rate is determined such that it additionally comprises basic map data for a subsequent uncovered route segment which is not covered by any access points. Accordingly, this aspect provides the further advantage that data for subsequent uncovered route segments which do not allow for downloading of data can be downloaded to the mobile device (e.g. cached) prior to arriving in the uncovered route segment. Still, if the respective covered route segment has a low corresponding estimated travel time, a low corresponding available data download rate and/or a high download cost rate, it is advantageously considered to only download basic map data of the uncovered segment.

Further preferably, the data volume for a respective covered route segment having a high corresponding estimated travel time, a high corresponding available data download rate and/or a low download cost rate is determined such that it additionally comprises additional map data for the respective covered route segment according to user preferences, basic map data for one or more subsequent covered route segments and/or basic map data for one or more subsequent uncovered route segments which are not covered by any access points. Accordingly, this provides the further advantage that additional data (more than is actually required) can be provided in case the respective covered route segment has a high corresponding estimated travel time, a high corresponding available data download rate and/or a low download cost rate, wherein the additional data may comprise additional data for this corresponding route segment, one or more subsequent route segments and/or even one or more subsequent uncovered route segments as mentioned above.

According to a preferred aspect, the travel route is determined on the basis of a route start position, a route destination position and navigation data, and the route start position for determining the travel route may be a route start position set by the user of the mobile device or a current position of the mobile device. Then, the travel route is a determined travel route from the route start position to the route destination position.

According to alternative preferred aspects, the travel route is determined on the basis of a current position of the mobile device when travelling along a specific road and an expected intermediate destination position, which is a position of one of a plurality of intersections of the specific road with other roads or a position of one of a plurality of exits of the specific road (e.g. highway exits in case the specific road is a highway, an expressway, a motorway, a freeway or the like). Then, the travel route is the road segment of the specific road from the current position to the intermediate destination position.

According to a preferred aspect, the method further comprises monitoring a current position of the mobile device when traveling along the travel route, and/or determining whether the current position of the mobile device is located on the travel route based on the monitored current position.

Preferably, if it is determined that the current position of the mobile device is not located on the travel route, a second travel route is determined based on the current position as route start position. The second travel route may be determined further on the basis of the route destination position and navigation data. Alternatively, in case no route destination position is set by the user, the second travel route can be determined based on navigation data, and on the current position and the moving direction of the mobile device/vehicle on the second specific road the mobile device/vehicle. Specifically, the second travel route can be determined on the basis of a current position of the mobile device when travelling along the second specific road and an expected second intermediate destination position, which is a position of one of a plurality of intersections of the second specific road with other roads or a position of one of a plurality of exits of the second specific road (e.g. highway exits in case the second specific road is a highway, an expressway, a motorway, a freeway or the like). Then, the travel route is the road segment of the second specific road from the current position to the second intermediate destination position.

Further preferably, on the basis of the second travel route, the method further comprises again the steps of identifying a second group of access points of the plurality of access points being located along the second travel route, determining, for each identified access point of the second group, the associated covered route segment of the travel route, determining, for each determined covered route segment, the estimated segment travel time of the mobile device along the respective covered route segment of the second travel route, determining, for each covered route segment, the data volume to be provided to the mobile device for download when being located on the respective covered route segment on the basis of the estimated segment travel time determined for the respective covered route segment of the second travel route, and/or providing, when the mobile device is located on a specific covered route segment of the covered route segments of the second travel route, the data volume determined for the specific covered route segment to the mobile device for download via the access point being associated with the specific covered route segment. This provides the advantage that the provision of data volumes can be adequately adjusted in case the user departs from the original travel route.

According to another preferred aspect of the invention, in aspects of the invention which consider the estimated travel times and the download cost rates (optionally additionally considering the available download rates), it is even further possible to calculate a plurality of alternative travel routes from the same route start point to the same route destination point. Respective access points and coverage areas can be identified and determined for all of the alternative routes, and corresponding data volumes for the route segments of all alternative routes can be determined as mentioned above.

Then, on the basis of the determined data volumes and the determined estimated travel times and download cost rates (optionally on the further basis of the available download rates), it becomes possible to determine an expected total cost for downloading the corresponding data volumes for each of the plurality of alternative routes. As a result, it becomes advantageously possible to determine (and propose to the user) the most download-cost-efficient travel route having the lowest total cost for downloading the corresponding data volumes among the alternative travel routes to the same route destination.

According to a second aspect of the present invention, there is proposed an apparatus, in particular server system comprising one or more servers, for managing downloading of data to a user's mobile device according to at least one of the above-described aspects.

According to the second aspect, the apparatus comprises access point identifying means for identifying a group of access points of the plurality of access points being located along the travel route, covered route segment determining means for determining, for each identified access point, an associated covered route segment of the travel route corresponding to the part of the travel route which is covered by the coverage area of the respective access point, estimated segment travel time determining means for determining, for each determined covered route segment, an estimated segment travel time of the mobile device along the respective covered route segment of the travel route, data volume determining means for determining, for each covered route segment, a data volume to be provided to the mobile device for download when being located on the respective covered route segment on the basis of the estimated segment travel time determined for the respective covered route segment, and data volume providing means for providing, when the mobile device is located on a specific covered route segment of the covered route segments, the data volume determined for the specific covered route segment to the mobile device for download via the access point being associated with the specific covered route segment.

According to a preferred aspect, the apparatus further comprises available data download rate determining means for determining, for each identified access point, an available data download rate for downloading data to the mobile device from the respective access point, wherein the data volume to be provided to the mobile device for download when being located on the respective covered route segment is preferably determined on the further basis of the available data download rate determined for the access point being associated with the respective covered route segment.

According to a preferred aspect, the apparatus further comprises download cost rate determining means for determining, for each identified access point, a download cost rate for downloading data from the respective access point to the mobile device when the mobile device is located in the coverage area of the respective access point while travelling along the travel route, wherein the data volume to be provided to the mobile device for download when being located in the coverage area of the respective access point is preferably determined on the further basis of the download cost rate determined for the respective access point.

According to a preferred aspect, the apparatus further comprises download control coefficient determining means for determining, for each determined covered route segment, a download control coefficient on the basis of the estimated segment travel time for the respective covered route segment.

According to a preferred aspect, the apparatus further comprises position monitoring means monitoring a current position of the mobile device when traveling along the travel route, and/or determining whether the current position of the mobile device is located on the travel route based on the monitored current position.

Further preferably, on the basis of the second travel route, the apparatus may further be configured for the following: identifying a second group of access points of the plurality of access points being located along the second travel route, determining, for each identified access point of the second group, the associated covered route segment of the travel route, determining, for each determined covered route segment, the estimated segment travel time of the mobile device along the respective covered route segment of the second travel route, determining, for each covered route segment, the data volume to be provided to the mobile device for download when being located on the respective covered route segment on the basis of the estimated segment travel time determined for the respective covered route segment of the second travel route, and/or providing, when the mobile device is located on a specific covered route segment of the covered route segments of the second travel route, the data volume determined for the specific covered route segment to the mobile device for download via the access point being associated with the specific covered route segment.

According to a third aspect of the present invention, there is proposed a computer program product comprising computer program means being configured to cause a server system comprising one or more server computers to execute the steps of the method according to at least one of the above-described aspects.

Summarizing the above, the present invention makes it possible to provide a method and an apparatus for managing downloading of data to a user's mobile device which is travelling along a travel route which allows to improve the communication between the server-side and the user-side along the travel route and which allows to provide a reliable and efficient exchange of data between the server-side and the user-side when a user having a user's mobile device is traveling along the travel route, in particular in connection with server-based thin client navigation and telematics services.

Some of the embodiments of the present invention even provide a way to enable advanced low-cost content caching for navigation systems along a travel route with different communication technologies and/or different access providers. It allows to cache data content dynamically, wherein the amount of data downloaded to cache can be decided based on a coverage area provided by an access point (e.g., GSM base station, 3G base station, UMTS base station, Wi-Fi access point, Bluetooth connection point ...) involving a certain cost along the chosen travel route. This advantageously enables the navigation system to download as much content as possible whenever the cost of communication in a certain coverage area is lower (e.g., Wi-Fi against 3G) - and also download content for areas where there is lack of connectivity whenever there is an opportunity for content download at low cost at a certain coverage area, thereby advantageously allowing to reduce the total effective communication cost for the user.

### Brief description of figures

- **Fig. 1**: shows an example of a thin client service system.
- **Fig. 2**: shows an exemplary schematic view of an in-vehicle device according to an embodiment of a mobile device at the mobile-device-side/vehicle-side.
- **Fig. 3**: exemplarily and schematically shows the functional architecture of a server of a service center according to an embodiment.
- **Fig. 4**: exemplarily and schematically shows the functional architecture of a mobile device at the mobile-device-side/vehicle-side according to an embodiment of the invention.
- **Figs. 5, 6 and 7**: exemplarily illustrate flowcharts of a server-side process according to embodiments of the invention.
- **Figs. 8**: and **9** exemplarily illustrate a user-side/mobile device process corresponding to the server-side process of Figs. 5, 6 and 7.
- **Fig. 10**: illustrates an example of a travel route from a route start point to a route destination point.

### Detailed description of figures and of preferred embodiments

Preferred embodiments of the present invention will be described below with reference to the accompanying figures. The described features and aspects of the embodiments may be modified or combined to form further embodiments of the present invention.

While a vehicle travels towards a route destination of a travel route along the travel route, there may be number of possibilities for the user's mobile device (which may be embodied by an in-vehicle device or also by a portable mobile device) to connect to different access point of different access technologies (e.g., wireless communication technologies such as Wi-Fi, GSM, 3G, Bluetooth, etc.) through access points (e.g., an Internet hotspot, a cellular base station, etc.) situated all along the travel route. Typically, a certain cost of communication is involved for receiving data using a particular access point.

The communication cost can depend on the type of access technology and/or on the communication provider available at that section of the travelling route. A server providing thin client navigation services may store information on access points, including locations of the access points, signal range and/or coverage area of the access points, communication technologies available at the access point and available download rates and/or download cost rates being associated with the access points.

In addition, users may have varied content requirements which may be stored as user preferences in user configuration data. Some users may require more data and others may require less data based on user's preferences, and this may be the case especially when users will have personal preference on navigation content e.g., in case they wish to additionally download 3D map detail, Point-of-Interest information (POI), etc. Still, it can be assumed that every user is concerned with the communication cost involved in obtaining such content while using such thin client services.

In the following, there will be described an exemplary preferred embodiment of the present invention for vehicular mobility solutions such as advanced driving assistance using thin-client navigation services.

According to the embodiment, the user's travel route is split into coverage sections CS (coverage areas) based on access points with different access technologies. Accordingly, a coverage section CS of an access point corresponds to an area in which the mobile device can download data from that access point. On the basis of positions of intersections of the travel route with the respective coverage sections, a route segment being associated with that access point can be determined, and the length of the route segment can be determined. That is, as long as the mobile device is located on the respective route segment, it can be assumed to be able to download data via the respective access point.

A cost-to-download factor CTD (embodying a download control coefficient) associated to each coverage section CS is determined taking into account the instantaneous travel time (estimated travel time) along the coverage section, i.e. along the corresponding route segment, and the amount of data to be downloaded to reach the chosen destination (route destination). The amount of data download can vary depending on the service level required, wherein the service level can be based on user's preferences which may be one of economic, content and service.

The cost-to-download factor CTD of a particular coverage section CS according to the embodiment is determined as a value that depends on (i) the instantaneous travel time (estimated travel time) to traverse a coverage section CS, (ii) an average download rate (available download rate) available at the coverage section CS, and (iii) a cost per unit download (download cost rate) in the coverage section CS. According to the embodiment, the cost-to-download factor may be determined according to a function of the above three contribution factors such that it is increasing with increasing cost per unit download, decreasing with increasing average download rate and decreasing with increasing instantaneous travel time.

A server can then track continuously the cost-to-download factors CTD of subsequent coverage sections along the travel route. Taking into account the total amount of data to be downloaded and the instantaneous travel time within a coverage section CS, the server then can provide an appropriate amount of data to download for the respective coverage section. The underlying principle is to download more data when the cost-to-download factor CTD is less and download fewer data when the cost-to-download factor CTD is more — without disrupting the service.

For the purpose of describing the embodiment in more detail, the following description involves an overall system architecture, the architecture on the mobile-device-side/vehicle-side, the functional architecture on the server-side, flowcharts of processes at the server-side and at the mobile-device-side/vehicle-side processes, and an example.

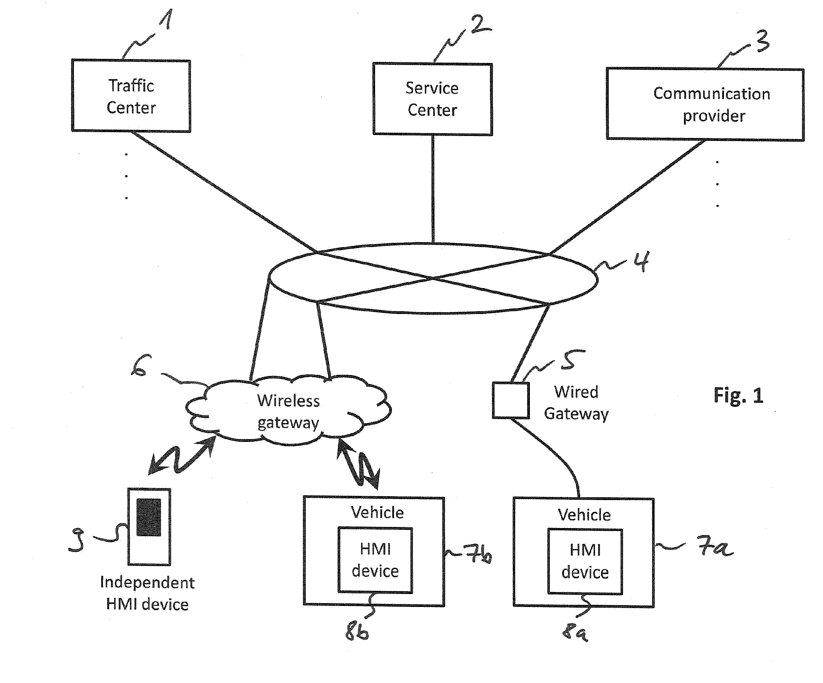

**Fig. 1** shows a thin client service system having a service center 2, one or more traffic centers 1 and one or more communication providers 3 being communicably connected via a communication network 4, and vehicles 7a and 7b which respectively contain an HMI device 8a or 8b (HMI for human machine interface, may include user operation means for user operations such as buttons, keys, a keyboard, a touch screen or the like and also display means for displaying information such as a display unit, a screen, a touch screen or the like) being connected through a wired communication gateway 5 (e.g. via PCL power line connection or other wired media) or a wireless communication gateway 6 to the network 4.

The service center 2 may be connected to the traffic centers 1 and the communication providers 3 through the communication network 4 such as the Internet, and can exchange data with them through the network 4. Service centers 2 may contain one or more connected servers in order to provide the target service to the thin client device such as the HMI devices 8a and 8b or another independent mobile HMI device 9 (such as a mobile phone, a portable personal computer, a smart phone, a tablet computer or the like). The servers may be located inside the service center or may be placed at different geographic locations.

The HMI devices 8a and 8b equipped in the vehicles 7a and 7b or the independent HMI device 9 (which can be connected also with the vehicle 7b as thin client devices are able to communicate with the server through the network 4 such as the Internet indirectly or directly via wireless media such as cellular and Wi-Fi, Bluetooth, GSM, G3 or UMTS connections or via wired media such as Ethernet or power line communications.

The traffic center 1 can be rendered by a system owned by road operators or traffic information service providers, which manages road traffic related information collected from roadside sensors and/or vehicles through communication networks (e.g. which provides real-time and/or statistical traffic information). The traffic center 1 is capable of providing the road traffic related information to the server(s) of the service center 2 through the network 4. The traffic related information may include collection of localization data, speed, direction of travel and also already estimated travelling times between geographic locations.

The communication provider 3 can be rendered by a telecom service operator who provides wireless and/or wired telecommunication services through fixed or mobile base-stations along the travel route of the vehicle by means of plural access points. The service operator may have knowledge of the unit cost of communication when exchange of data happens between mobile or stationary entities with one or multiple base- stations connected to the service provider's center. This cost information can be shared with the server(s) service center 2 through the network 4.

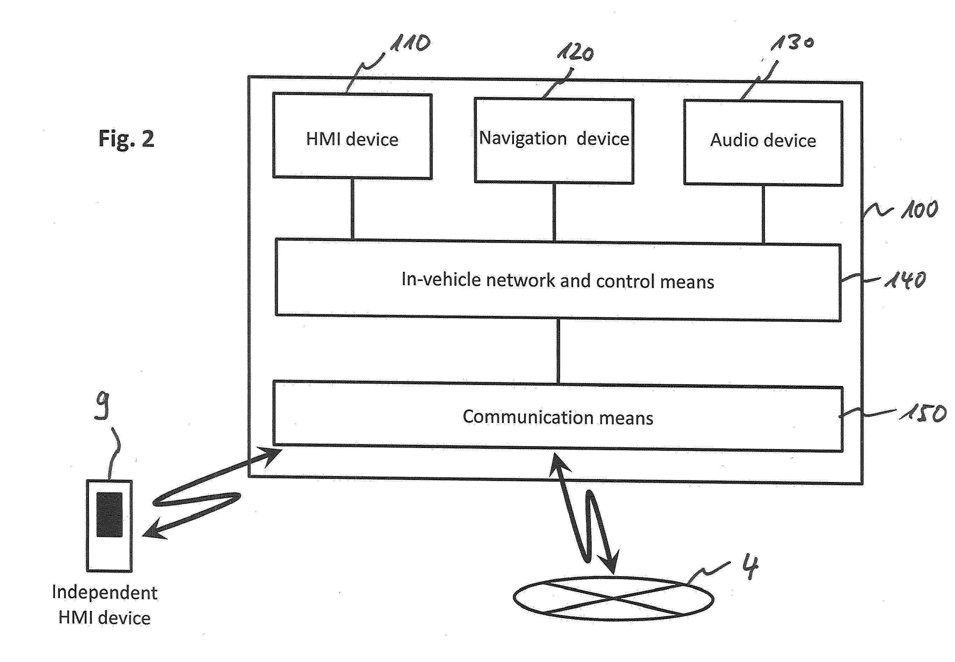

**Fig. 2** shows an exemplary schematic view of the structural architecture of an in-vehicle device 100 which is exemplarily embodying a mobile device at the mobile-device-side/vehicle-side. The in-vehicle device 100 includes the following components: an HMI device 110 (similar to the above-mentioned HMI devices 8a and 8b), an audio device 130, a navigation device 120, communication means 150, an in-vehicle network and control means 140 and, optionally, an additional independent HMI device 9 connected to the in-vehicle device 100 via a wired or wireless network.

The HMI device 110 is the interface between the user such as the driver or the passengers of the vehicle to operate and/or control telematics devices, such as the navigation device 120. The HMI device 110 can get travel information input from user via the in-vehicle network and control means 140, and also it can communicate with the outside of the vehicle, for example with the server(s) of the service center 2, through the communication means 150 and the one or more networks to which the communication means 150 are connected.

An HMI device may not necessarily be directly equipped in the vehicle. The independent HMI device 9, which is not directly equipped in the vehicle, can also support the user such as the driver or the passengers to access vehicle-related services, especially telematics. For example, a PND (Portable Navigation Device) or a mobile smart phone is also capable of providing the navigation services. The audio device 130 provides means for recording and processing user input using speech or sounds via for a microphone and outputs response using audio system such as speakers.

Thin-client devices may not necessarily have local navigation capabilities. The navigation itself can be managed by the server(s) of the service center 2 when there is no or limited navigation capability at the thin-client device itself. On the contrary, when devices have navigation capabilities, a navigation device is included in the user system and can be interfaced with the in-vehicle network control means 140.

The communication means 150 enables to send and receive data between the in-vehicle components or devices and exterior components or devices, by means of communication media such as cellular, Bluetooth, Wi-Fi etc. The communication means 150 can be realized by an independent communication module like Telematics Control Unit (TCU), as well as by being attached directly to specific devices such as the HMI device 110.

The in-vehicle network and control means 140 provides the functionality for the internal components or devices in the vehicle to communicate with other devices or components in the vehicle, according to established automotive network communication protocol, for example.

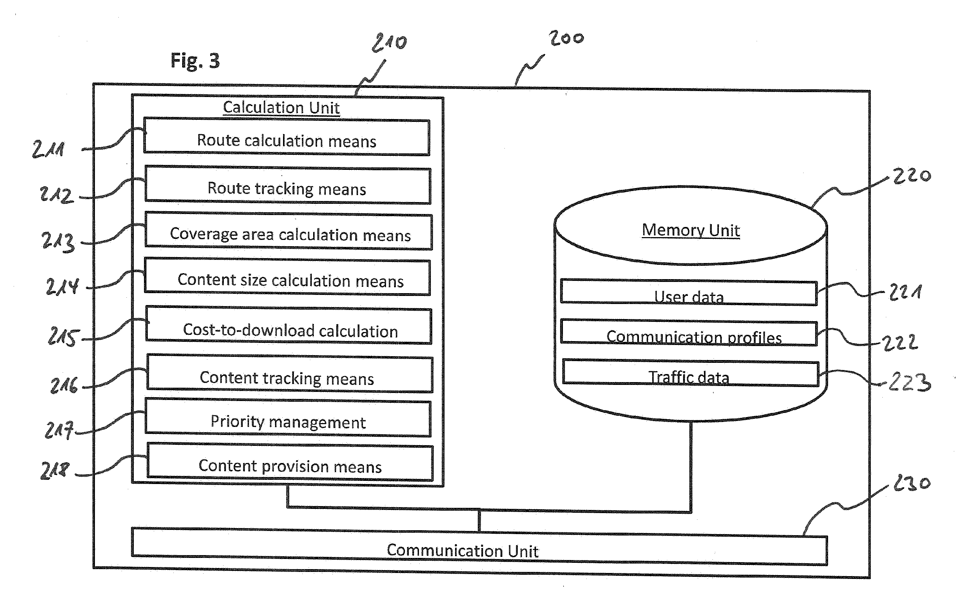

**Fig. 3** exemplarily and schematically shows the functional architecture of a server 200 of the service center 2. The server 200 includes a calculation unit 210, a memory unit 220 and a communication unit 230. The calculation unit 210 comprises route calculation means 211, route tracking means 212, coverage area calculation means 213, content size calculation means 214, cost-to-download calculation means 215, content tracking means 216, priority management means 217 and content provision means 218.

The route calculation means 211 is configured to perform route calculation with respect to the user's input details which may contain a current position, a destination position and other preference such as requests for Point-of-Interest (POI) information, 3D-map detail or the like. The calculated travel route is then used to compute the amount of download necessary to reach the destination of the travel route. Multiple routes may exist depending on the destination chosen by the user. The server 200 may also suggest the best cost-based route with least communication cost (depending on the access points present along the route). The best cost-based route need not necessarily be the fastest or the shortest route — and at such situations, if the user desires only the shortest or fastest route, the server 200 may provide content management for that route chosen by the user.

According to the present embodiment, the route calculation means 211 is provided for determining a travel route on the basis of a current position or set start position as a route start position and a route destination position such as a manually set destination position, the travel route being calculated on the basis of navigational map data of a traffic network. However, is to be noted that the present invention is not limited to providing downloadable content in case the vehicle/mobile device is travelling along a travel route that is calculated by navigational route calculations based on a route start position and a route destination position set by the user. The underlying idea of the invention is to divide a travel route into different coverage sections and to determine the downloadable data amount on the basis of the above and below described characteristics for the different coverage sections.

This concept of the present invention is also applicable to embodiments in which the travel route is an expected travel route of the vehicle/mobile device starting from a current position. Such expected travel routes may be represented by a road segment of the specific road on which the vehicle/mobile device is travelling and is expected to continue travelling. For example, in case the vehicle/mobile device is travelling on a highway (expressway, freeway or the like), the travel route may be represented by a road segment of the highway from the current position up to one of the next exits of the highway since it is highly likely that the vehicle/mobile device will stay on the highway until the exit (at least until the next exit, wherein it is certain that the vehicle/mobile device will stay on the highway until the next exit). In case the vehicle/mobile device is travelling on a rural road or the like, the travel route may be represented by a road segment of the rural road from the current position up to one of the next intersections with other rural roads since it is highly likely that the vehicle/mobile device will stay on the road until the intersection (at least until the next intersection, wherein it is certain that the vehicle/mobile device will stay on the rural road until the next intersection).

The route tracking means 212 is configured to perform route tracking which involves the constant monitoring of the current position/current route of the vehicle with respect to the destination position in order to detect any changes that may occur with regard to the initially calculated route, e.g. if the user departs from the initial travel route. The route tracking means 212 is configured to notify the route calculation means 211 for new route calculation and then trigger recalculation of data download necessary.

The coverage area calculation means 213 is configured to perform coverage area calculation as follows. The availability of access points along the planned travel route is identified (e.g. based on information on locations of access points provided by the communication provider 3) and their respective approximate coverage area along the section of the planned travel route is calculated by the coverage area calculation means 213. For each alternative travel route, the coverage area calculation means 213 can also provide the communication media (communication technologies) being available and the communication coverage for each travel route.

The content size calculation means 214 is configured to perform content size calculation which involves an estimation of the total data content required to reach the route destination taking into account additional user's preferences. For example, a minimum amount of download can be calculated first which is necessary in order to reach the route destination with only basic preferences (i.e., basic map data of the planned travel route). The user's content may be either basic or advanced (i.e. including POI data and/or 3D-map detail). In the latter case, more data needs to be sent to the user's mobile device from the server 200, wherein the content size thereof can also be determined by the content size calculation means 214.

The cost-to-download calculation means 215 is configured to perform cost-to-download calculation (determining cost rates associated with coverage areas) which involves the calculation of the communication cost involved when a vehicle receives certain amount of data at a certain coverage area of a respective access point.

The content tracking means 216 is configured to keep track of the amount of data received and the remaining content with respect to the user's destination and personal preferences. In particular, the content tracking means 216 is configured to keep track of which data content has already been downloaded from the server 200.

The priority management means 217 is configured to perform priority management in connection with the content. Namely, the data content itself is split into different levels, the basic one being e.g. map detail (e.g. high or low map detail). Other high level details can be split into different priority levels based on user's preference. When reaching a coverage area, the server 200 first sends content for basic map detail in order to reach the destination. Then it may send high-level details at appropriate low-cost coverage sections, if available.

The content provision means 218 being configured to provide downloadable data to the mobile device (such as the device 100) for download. In particular, it can provide the navigation content to the user. When thin-client services are concerned, the content provision means 218 may provide an HMI image directly to the end users, resulting in the corresponding communication cost. In another service, the server side may provide the navigation information to user side device, which can realize navigation service locally at the user device.

The memory unit 220 of the server contains the following information. User data 221 which indicates the user identification and/or the services provided to the user. It may also distinguish premium users with high quality service from basic users with economic service. Communication profile data 222 which indicates information regarding the availability and location of access points in a certain geographic area and the communication cost charged by the operators for sending/receiving data using a certain access point. It may also indicate a signal range and/or a coverage area of access points. This information of the communication profile data 222 can be obtained from the communication provider 3. Traffic data 223 which indicates current traffic information of vehicles and the status of the roads (e.g. information on accidents, road works etc.) along sections of the route based on real-time and/or statistical traffic information. The data 223 can be obtained on demand or may be stored prior to demand.

This traffic data 223 can be used to calculate the instantaneous travel times along certain sections of the planned travel route. By estimating the instantaneous travel times for route segments being covered by coverage areas of access points, this advantageously directly translates into the time duration that the vehicle is expected to stay within a respective coverage section and the amount of time it has to send or receive content from the access point.

The communication unit 230 is capable of allowing the server to send and receive data through the connected network with the other devices and systems on both wired and wireless forms, e.g. to the target mobile device.

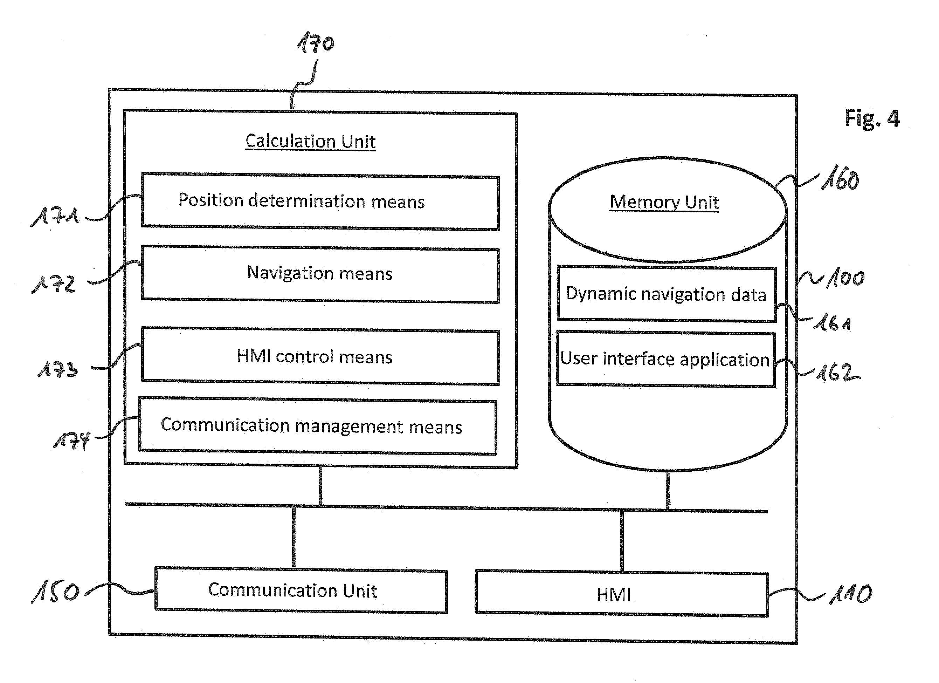

**Fig. 4** exemplarily and schematically shows the functional architecture of a mobile device 100 (e.g. a portable mobile device or an in-vehicle device such as e.g. the in-vehicle device 100 shown in Fig. 2) according to an embodiment of the invention. The mobile device 100 comprises a calculation unit 170, a memory unit 160, a communication unit 150 and an HMI unit 110. The calculation unit 170 comprises position determining means 171, navigation means 172, HMI control means 173, and communication management means 174.

The position determination means 171 is configured to determine a position of the mobile device 100. The geographical position information of the mobile device 100 can, for example, be determined by a position-determining unit which is configured to determine a position based on a satellite positioning system such as a GPS module or a GALILEO module. The position-determining unit 171 may be integrated into the HMI device 110 of Fig. 2, or it may also be connected to the in-vehicle network and be accessible through the in-vehicle network and control means 140.

The navigation means 172 is configured to provide navigation service to the user such as the driver of the vehicle or the passengers by using the HMI control means 173 based on navigation information and traffic information. The navigation means 172 according to the embodiment is provided at the user side, but it may also be provided at the server side. In the navigation means 172 according to an embodiment of the invention, the navigation means 172 enables users to select a communication-cost-based navigation assistance service as will be described in more detail in the following.

The HMI control means 173 is configured to control the HMI device 110 and manage user input and/or output using, for example, an HMI visual display unit or audio recognition and response means. The HMI control means 173 is further configured to dynamically provide navigation assistance information to the user, for example, using a specific HMI setting, e.g. according to the defined service level negotiated between user side and the server side.

The communication management means 174 is configured to control the communication unit 150 and provides control to switch between communication interfaces that are being used to connect to server, e.g. in case of handing over from one access point to another which may involve also handing over between different access technologies and/or between different communication providers.

The memory unit 160 is configured to store information data such as for example dynamic navigation data 161 and user interface application data 162. The dynamic navigation data 161 may be information received from the server 200. The data content is typically dynamic because, due to limited memory of the memory unit 160, the stored data can be constantly removed and replaced with updated data or new data such as currently needed data or data needed in the future. For example, map data relating to route segments of a travel route that have been already travelled can be removed from the memory unit 160 in order to provide available storage space for currently needed map data or map data for subsequent route segments which will be travelled subsequently. The user interface application data 162 relates to a user interface application which is a program which handles manipulation of the input from the user and system output based on user's request.

The communication unit 150 is configured to send and receive data to/from the server 200 via access points, when the mobile device 100 is located inside a coverage area of at least one access point. The communication unit 150 enables the mobile device 100 to send and receive data through the connected network with the other devices and systems on wired and/or wireless forms.

The HMI unit 110 is configured to serve as an interface between the user and the system. By means of the HMI unit 110, the user is enabled to input configuration information into the system using audio and/or manual input and may subsequently receive a visual and/or audio response from the HMI unit 110.

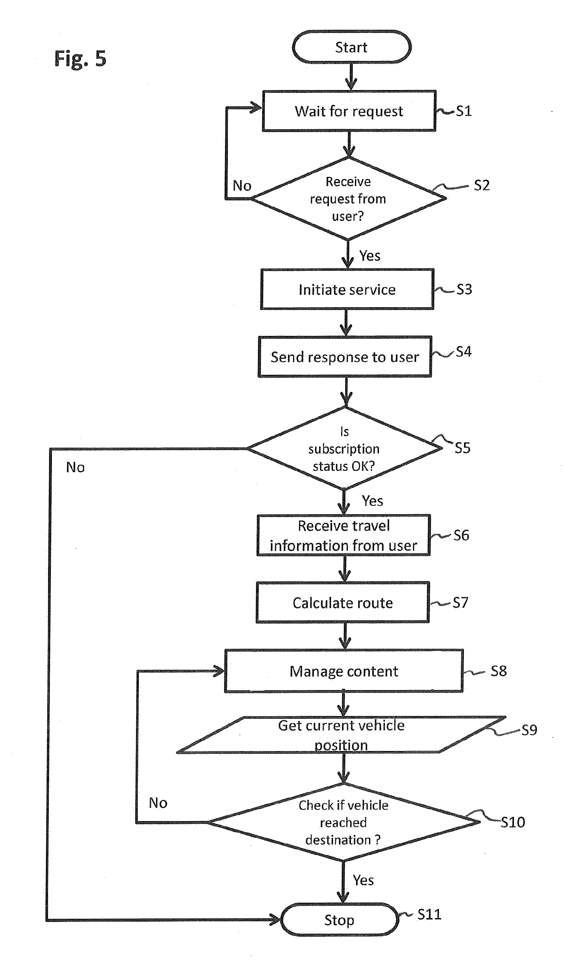

In the following, exemplary processes at the server-side and the user-side will be exemplarily described in more detail. First, an exemplary server-side process is described with reference to Figs. 5, 6 and 7. The exemplary flowcharts in Figs. 5, 6 and 7 show a process of control that may be involved at the server-side.

As shown in **Fig. 5****,** the server 200 at first is in a waiting mode and waits for a message and/or a request from the user' mobile device 100 (step S1). Upon receipt of a request and/or a message from the user' mobile device 100 (step S2 returns YES), the processing means (e.g. calculation unit 210) of the server 200 initiates the server-side process (step S3). Otherwise (step S2 returns NO), the server 200 continues with the waiting mode and waits for a message and/or a request from the user' mobile device 100 (step S1).

The activation request received in step S2 (step S2 returns YES) may, for example, contain user identity authentication data identifying the respective user and/or mobile device 100, e.g. in case the server 200 is configured to handle plural mobile devices 100. The request may further contain a vehicle ID of the user's vehicle, communication capability information (e.g. the mobile device and/or the vehicle can have multiple wireless and/or wired interfaces) and/or user's HMI device information indicating, for example, a type and/or functionalities of the user's HMI device 110. Also, user's preferences such as e.g. navigation preferences (e.g. indicating a user required service level including requested map detail level, request for optional POI information etc.) may be included in a message and/or request received in the step S2. Alternatively, it may also be already stored as a static setting mapped to the user identity in the memory unit 220 of the server 200.

In step S3, the server 200 may initiate the service by checking for a user subscription to the particular service from a database in the memory unit 220. Referring to steps S4 and S5, if the user is not subscribed, the communication unit 230 of the server 200 sends a negative response message to the mobile device 100 and then stops (step S11) the service for the user and returns to a waiting mode. However, if the user is subscribed (step S5 will return Yes), the server responds positively to the user, and continues with steps S6 to S10 in order to provide the service, until reaching a chosen route destination.

In step S6, the server 200 receives route information data from the user's mobile device 100 which is typically including information on the selected route destination and a current position of the user's mobile device 100, thereby enabling the route calculation means 211 to determine one or more travel routes from the current position to the selected route destination based on navigation data stored in the memory unit 220. Optionally, the server 200 may further receive personal user's preferences such as enabled request for Point-of-Interest (POI) information and/or requests for extra-map detail such as e.g. 3D-map detail data. The information received in step S6 may be obtained in plural ways such as, for example, in that the mobile device 100 may send the travel information details automatically during a request for service provision or the server 200 may request the information after validating the subscription of the user.

The calculation of a travel route is then performed on the basis of the received information in step S7, and it may include generating a geographic trace of points along the planned travel route. When the vehicle travels along the route, the trace points can be used as references for content download and coverage section identification.

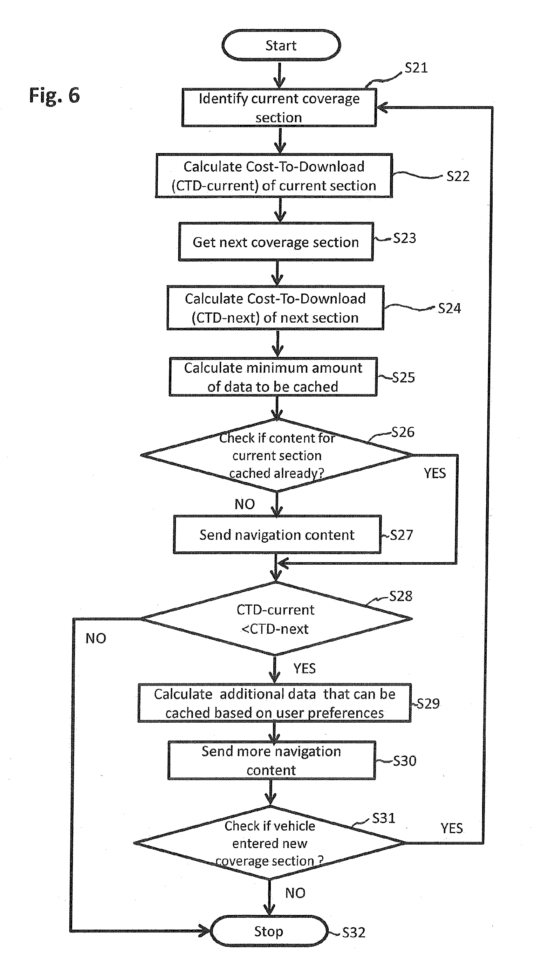

After performing the route calculation, the content management process (step S8) is executed. An exemplary process being performed in step S8 is described with reference to the flowchart shown in Fig. 6 in steps S21 through S32 described below.

After step S8, the server 200 determines the current position of the mobile device 100 with respect to the destination the destination in steps S9 and S10. For example, the server 200 may request the information on the current position or it may automatically receive regularly or periodically the respective position information from the mobile device 200. If the destination position matches with the current vehicle position (step S10 returns Yes), then the server 200 process stops continuing the service (step S11). If not (step S10 returns No), the server process enters a loop process and continues to execute the content management process in step S8 in the loop of steps S8 to S10 until the destination is reached, i.e. until step S10 returns Yes.

The content management process mentioned above in connection with step S8 is exemplarily illustrated in **Fig. 6** including steps S21 to S32. It may represent the operation behind the dynamic content provision from the server-side.

The calculation unit 210 of the server 200 identifies a current coverage section in step S21 using the current vehicle position, i.e. it determines a coverage area of an access point in which the mobile device is currently located. This identification may include checking for available access points at the user's location (e.g. based on access point data obtained from mobile service providers). Then, one access point which appropriately covers the planned section of the travel route is selected and corresponding start and stop points of coverage (i.e. points of intersection of the travel route with the coverage area of the access point) along the geographic trace points of the calculated travel route obtained in step S7 are identified for determining a covered route segment of the travel route which corresponds to the part of the travel route which is located inside the coverage area of the access point. The distance along the route segment between the identified start and stop points is determined as a respective coverage section length.

After identifying the coverage section and determining the respective coverage section length being a length of the corresponding route segment, the cost-to-download calculation means 215 then calculates a respective cost-to-download (CTD) factor for that particular current coverage section in step S22. The cost-to-download factor is determined depending on the estimated travel time determined for the respective coverage section length being a length of the corresponding route segment, and which may further advantageously be depending on the available download rate and the download cost rate provided in that particular coverage section.

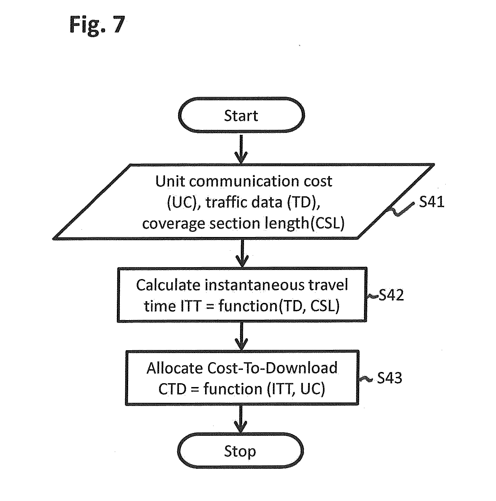

An exemplary process for determining a cost-to-download factor for a particular coverage section or route segment is explained with reference to **Fig. 7****,** including steps S41 to S43. Here, exemplarily, the cost-to-download factor is determined depending on the estimated travel time determined for the respective coverage section length being a length of the corresponding route segment and depending on the available download rate and the download cost rate provided in that particular coverage section.

In step S41 of Fig. 7, the server 200 obtains the following data: unit communication cost (cost download rate for the respective access point) from the communication profiles stored in the server database of the memory unit 220 and/or received from the provider(s), traffic data from traffic center (including possible real-time and/or statistical traffic information) and the already calculated coverage section length (see step S21).

The instantaneous travel time ITT (estimated travel time for the respective route segment) is calculated in step S42 using the traffic data TD and the coverage section length CSL. Then, in step S43 the cost-to-download calculation means 215 calculates the cost-to-download factor CTD (as a download control coefficient) based on the calculated instantaneous travel time ITT and the unit communication cost UC (download cost rate). Specifically, according to the embodiment, the cost-to-download factor CTD is determined according to a function which increases with the unit communication cost UC (download cost rate) and decreases with the instantaneous travel time ITT (estimated travel time for the respective route segment). In addition, the cost-to-download factor CTD is determined according to the function which decreases with increasing available download rate (which can be determined on the basis of the used access technology, user's settings and/or a currently available bandwidth at the respective access point).

Referring again to Fig. 6, after steps S21 and S22, the next coverage section is identified in step S23 and the corresponding cost-to-download factor is determined in step S24, similar to steps S21 and S22 for the current coverage section. The next coverage section may represent a subsequent coverage section which directly follows the current coverage section along the travel route so that it is possible to hand over communication between the access points when the mobile device 100 is leaving the current coverage section and enters the next coverage section. Also, it is possible that an uncovered route segment is located between the current coverage section and the next coverage section so that there is to be expected a communication interruption on the uncovered route segment between the current coverage section and the next coverage section.

First, a minimum amount of data to be cached in the mobile device 100 is calculated in step S25. This amount can be calculated by using the coverage section length and the basic map detail that is necessary to traverse the current coverage section. If this minimum data has not yet been sent by the server (step S26 returns No), the corresponding data volume having the minimum basic map data for the current coverage section is immediately provided to the mobile device 100 (step S27).

In step S28, the cost-to-download factors of the current section (CTD-current) determined in step S22 and of the following coverage section (CTD-next) determined in step S24 are compared in step S28. If the cost-to-download factor of the current section is less than the cost-to-download of the following coverage section, then a calculation of additional data is performed, e.g. based on user's preferences (step S29). The additional data is then provided to the mobile device 100 (step S30), e.g. in a loop of steps S29 to S31 until the vehicle entered a next coverage section (step S31 returns Yes) or at least left the current coverage section. Then, the previous "next coverage section" becomes the new "current coverage section" and the content management process continues again from step S21 for the new current coverage section.

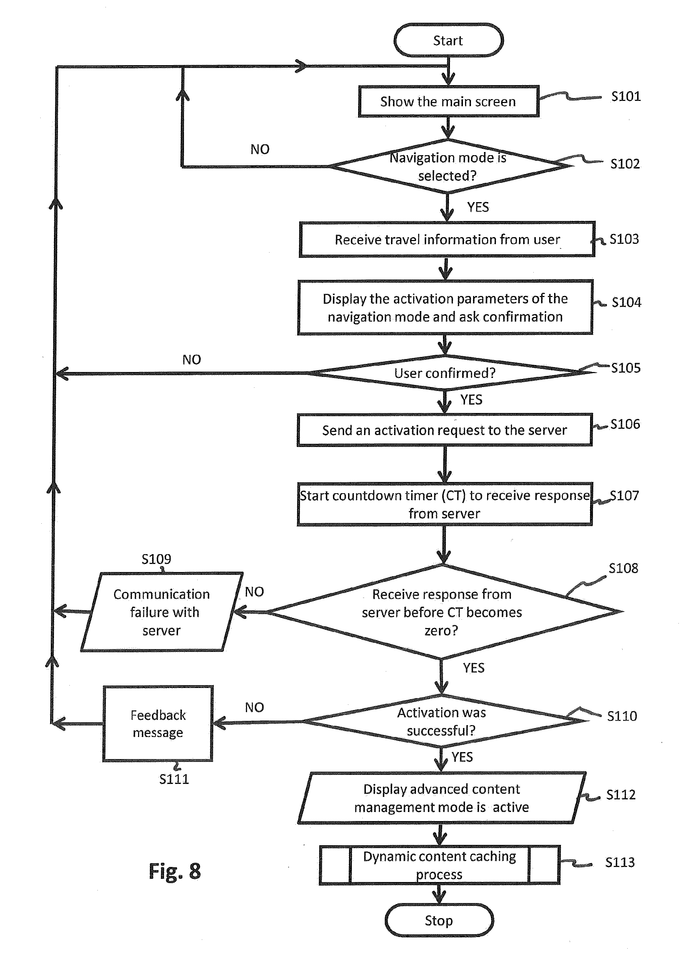

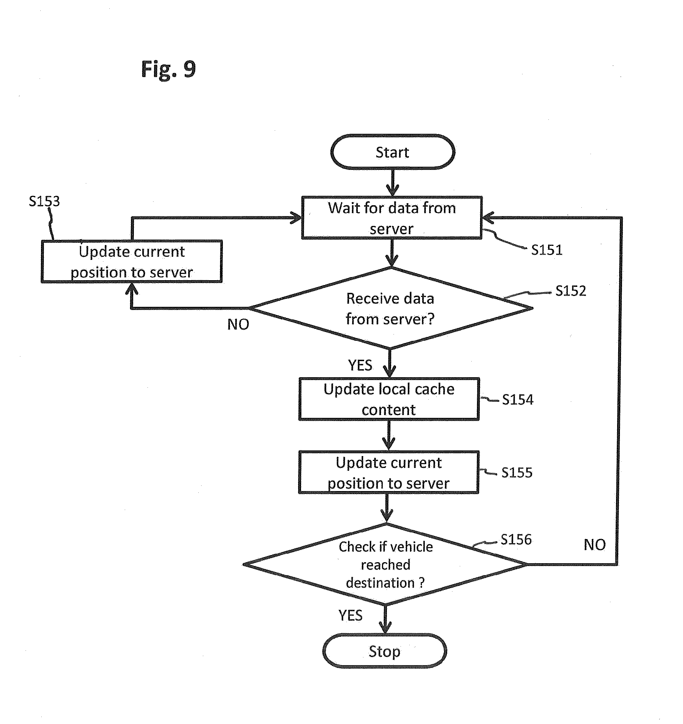

**Figs. 8** and **9** exemplarily illustrate a user-side/mobile device process which may be performed at the mobile device 100 corresponding to the server-side process described above. The mobile device may waits for a selection input from the user and shows a main screen of the HMI device 110 (step S101). The main screen may provide a selection in order to proceed with the advanced content management function of the embodiment and potentially also other driving assistance functions in addition to the advanced navigation service described with respect to the present embodiment.

A decision is made at step S102 when the user selects for advanced navigation function. If the user wants to enable the function by means of the HMI device 110, then the steps from S103 to S113 are executed. If the user does not want to enable advanced navigation mode, then the process continues with the waiting mode at step S101.

In step S103, the user is requested to input travel such as a destination positions and maybe other points of interest along the intended travel route. A summary of the selected parameters is provided by the HMI device 110 and asking for user's confirmation is done in step S104. When the user confirms the input parameters in step S105, the mobile device 100 sends a request to the server 200 (S106, e.g. received in step S2 discussed above) and starts a count-down timer (step S107) before which it expects a reply from the server 200.

In step S108, if a response is received from the server 200 at the mobile device 100 before timer expiry, then steps S110 to S113 are performed. If no reply is received from the server 200 before timer expiry, the HMI device 110 may be configured to inform the user that a communication failure with the server 200 may have occurred (step S109).

The received response from the server 200 is checked in step S110 for successful activation. If the activation response is unsuccessful (for example due to invalid user subscription to the service), the appropriate message is conveyed to the user without further process (step S111). However, if the activation is successful (step S110 gives Yes), a dynamic content caching process is started (step S113).

**Fig. 9** exemplarily shows a dynamic content caching process as may be performed in step S113 above. The mobile device 100 waits for data from the server 200 in S151. When there is no data received from the server 200 (step S152 returns NO), it continues to wait for data and regularly or periodically updates its current position to the server (step S153). Alternatively, it may wait for a request from the server 200 and only update the current position upon request.

When data is received from the server 200 (step S152 returns YES), the content is analyzed and stored into the memory unit 160 in step S154. Then the mobile device 100 updates its current position determined by the position determining means 171 to the server 200 in step S155, and checks whether the actual current position is equal to the destination information entered initially (step S156) in order to determine whether the intended destination has been reached. If the destination has not been reached yet (step S56 returns No), the process continues again with step S151. On the other hand, if the destination has been reached, the process is stopped.

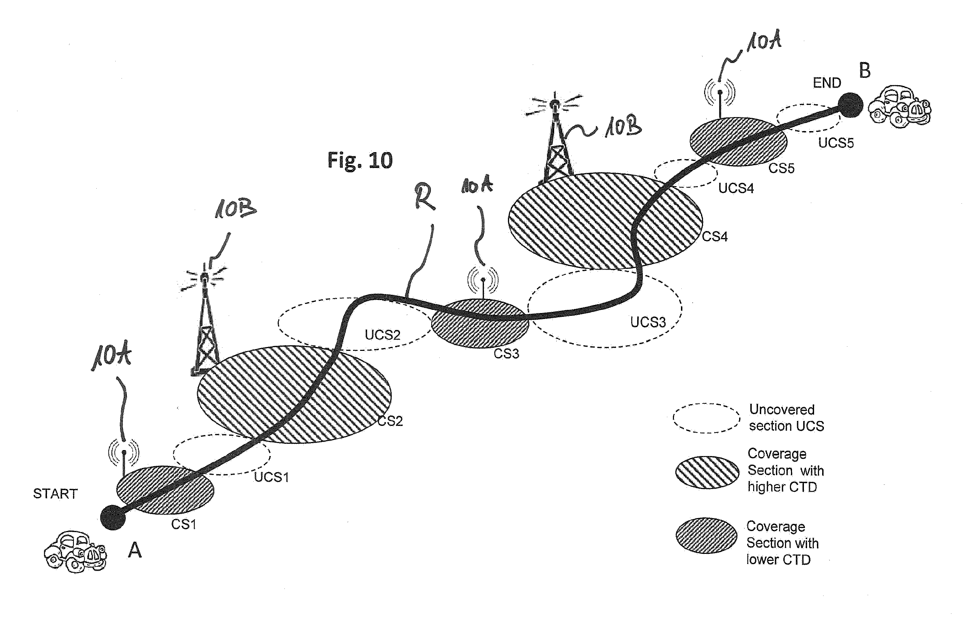

**Fig. 10** illustrates an example of a travel route R from a route start point A to a route destination point B. Along the travel route, a plurality of access points 10A and 10B are located such that the corresponding coverage areas CS1 to CS5 cover certain covered route segments of the travel route. Exemplarily, the access points comprise different types of access points 10A and 10B which may provide access via different communication technologies. For example, the access points 10A may provide Wi-Fi access and the access points 10B may provide cellular access. Also, different access points may be managed by different communication providers. They may also have coverage areas of different size.

Consider a vehicle travelling from the route start point A to the route destination point B. The travel route contains covered sections CS1 to CS5 (also referred to as covered areas). A covered section is an area where there is provided network connectivity between the mobile device/vehicle and the communication provider(s) with a certain access technology via a corresponding access point. For example, when being located in the coverage section CS3, the mobile device/vehicle may communicate via the respective access point 10A.

Additionally, there may be uncovered sections such as sections UCS1 to UCS5. Uncovered sections are those areas where there is little or no coverage by any access point, where there is insufficient connectivity to have a data communication between the mobile device/vehicle and service provider(s).

Depending on the type of access technology (e.g. Wi-Fi, Bluetooth, GSM or 3G for example), the coverage area size may vary. Thus, it is considered that the duration of time for which the vehicle will remains in a certain covered area may vary for different access technologies. In addition, depending on route characteristics (types of roads, speed limits) and traffic conditions (e.g. traffic jam, bad weather), the vehicle may remain for a longer duration in a particular covered area than in other covered areas.

According to an example, the advanced function for navigation service may involve calculating a cost-to-download factor for each of the coverage areas CS1 to CS5. First, the estimated travel time can be calculated for each the of the coverage areas CS1 to CS5, the estimated travel time corresponds to the respective travel time needed for the vehicle to cross the respective coverage area. Calculating the estimated travel times may take into account the current traffic data (e.g. real-time and/or statistic traffic information related to the particular coverage area) and on the coverage section length as described above. This instantaneously calculated travel time is then used to calculate the cost-to-download factors CTD for all coverage areas CS1 to CS5 by taking into account the unit data communication cost occurring by using the respective access point available in the respective coverage area.

In this example, for coverage areas CS1, CS3 and CS5 with a resulting low cost-to download factor CTD (e.g. due to the a high available download rate and/or low unit download costs), data content can be provided by the server 200 and received by the vehicle in the following order of priority managed by the priority management means 217: map data for the corresponding current coverage area (if not downloaded in a previous coverage area), map data for one or more uncovered areas UCS1 to UCS5 until the subsequent coverage area and map data for one or more subsequent coverage areas. Content is downloaded starting from a minimum level (e.g. containing only basic map) followed by high-end details (including possible POI information on Points-of-Interest and/or 3D-map detail data) are cached in the memory unit 160 (maybe depending on user's preferences, e.g. when the user has set POI data and/or 3D mad detail as requested preferences).

For coverage areas CS2 and CS4 with a resulting high cost-to download factor CTD (e.g. due to the a low available download rate and/or high unit download costs), content download is made in the following order of priority: basic map data for the corresponding current coverage area (if not downloaded in a previous coverage area), basic map data for one subsequent uncovered area UCS and potentially for further subsequent uncovered areas UCS if no coverage area is available after the subsequent uncovered areas UC. Here, due to the high cost-to download factor CTD, the content download is preferably restricted only to basic map details in coverage areas with higher cost-to download factor CTD unless it is specified by the user's preferences to download high-end details as well for coverage areas with higher cost-to download factor CTD.

## Claims

1. Method for managing downloading of data to a user's mobile device which is travelling along a travel route,
the mobile device being configured to download data via a communication network comprising a plurality of access points, each access point being configured for enabling downloading data to the mobile device via the communication network when the mobile device is located in a coverage area of the respective access point while travelling along the travel route,
the method comprising:
- identifying a group of access points of the plurality of access points being located along the travel route,
- determining, for each identified access point, an associated covered route segment of the travel route corresponding to the part of the travel route which is covered by the coverage area of the respective access point,
- determining, for each determined covered route segment, an estimated segment travel time of the mobile device along the respective covered route segment of the travel route,
- determining, for each covered route segment, a data volume to be provided to the mobile device for download when being located on the respective covered route segment on the basis of the estimated segment travel time determined for the respective covered route segment, and
- providing, when the mobile device is located on a specific covered route segment of the covered route segments, the data volume determined for the specific covered route segment to the mobile device for download via the access point being associated with the specific covered route segment.

2. Method according to claim 1, **characterized in that**
the data volumes for covered route segments are determined such that a data size of the data volumes is depending on the estimated segment travel times,
wherein the estimated segment travel time for a respective covered route segment is determined on the basis of traffic information data indicating real-time traffic information, statistical traffic information about the respective covered route segment, and/or a current travelling speed of the mobile device.

3. Method according to at least one of the preceding claims, **characterized by** further comprising:
- determining, for each identified access point, an available data download rate for downloading data to the mobile device from the respective access point,
wherein the data volume to be provided to the mobile device for download when being located on the respective covered route segment is determined on the further basis of the available data download rate determined for the access point being associated with the respective covered route segment.

4. Method according to claim 3, **characterized in that**
the data volumes for covered route segments are determined such that a data size of the data volumes is depending on the available data download rates, a larger available data download rate leading to a larger data size of the respective determined data volume and a smaller available data download rate leading to a smaller data size of the respective determined data volume.

5. Method according to at least one of the preceding claims, **characterized by** further comprising:
- determining, for each identified access point, a download cost rate for downloading data from the respective access point to the mobile device when the mobile device is located in the coverage area of the respective access point while travelling along the travel route,
wherein the data volume to be provided to the mobile device for download when being located in the coverage area of the respective access point is determined on the further basis of the download cost rate determined for the respective access point.

6. Method according to claim 5, **characterized in that**
the data volumes for covered route segments are determined such that a data size of the data volumes is depending on the download cost rates, a larger download cost rate leading to a smaller data size of the respective determined data volume and a smaller download cost rate leading to a larger data size of the respective determined data volume.

7. Method according to at least one of the preceding claims, **characterized by** further comprising:
- determining, for each determined covered route segment, a download control coefficient on the basis of the estimated segment travel time for the respective covered route segment,
wherein the data volume to be provided to the mobile device for download when being located in the coverage area of the respective access point is determined on the basis of a comparison of the download control coefficient determined for the first covered route segment and the download control coefficient determined for a second covered route segment which is subsequent to the first covered route segment.

8. Method according to claim 7, **characterized in that**
each download control coefficient is determined according to a function which decreases with increasing segment travel time, which decreases with increasing available data download rate and/or which increases with increasing download cost rate, wherein a higher amount of downloadable data is provided when the mobile device is located on a covered route segment having a lower download control coefficient compared to when the mobile device is located on a covered route segment having a higher download control coefficient; or
each download control coefficient is determined according to a function which increases with increasing segment travel time, which increases with increasing available data download rate and/or which decreases with increasing download cost rate, wherein a lower amount of downloadable data is provided when the mobile device is located on a covered route segment having a lower download control coefficient compared to when the mobile device is located on a covered route segment having a higher download control coefficient.

9. Method according to at least one of the preceding claims, **characterized in that** the data volumes comprise navigation map data for displaying a navigation map image on a display unit of the mobile device.

10. Method according to claim 9, **characterized in that**
the data volume for a respective covered route segment is determined such that it at least comprises basic map data for the respective covered route segment, if not downloaded already.

11. Method according to claim 10, **characterized in that**
the data volume for a respective covered route segment having a low corresponding estimated travel time, a low corresponding available data download rate and/or a high download cost rate is determined such that it additionally comprises basic map data for a subsequent uncovered route segment which is not covered by any access points.

12. Method according to claim 10 or 11, **characterized in that**
the data volume for a respective covered route segment having a high corresponding estimated travel time, a high corresponding available data download rate and/or a low download cost rate is determined such that it additionally comprises additional map data for the respective covered route segment according to user preferences, basic map data for one or more subsequent covered route segments and/or basic map data for one or more subsequent uncovered route segments which are not covered by any access points.

13. Method according to at least one of the preceding claims, **characterized by** further comprising:
monitoring a current position of the mobile device when traveling along the travel route, and
determining whether the current position of the mobile device is located on the travel route based on the monitored current position,
wherein, if it is determined that the current position of the mobile device is not located on the travel route, a second travel route is determined using the current position as a route start position of the second travel route, and
wherein, on the basis of the second travel route, the method further comprises:
- identifying a second group of access points of the plurality of access points being located along the determined second travel route,
- determining, for each identified access point of the second group, the associated covered route segment of the second travel route,
- determining, for each determined covered route segment, the estimated segment travel time of the mobile device along the respective covered route segment of the second travel route,
- determining, for each covered route segment, the data volume to be provided to the mobile device for download when being located on the respective covered route segment on the basis of the estimated segment travel time determined for the respective covered route segment of the second travel route, and
- providing, when the mobile device is located on a specific covered route segment of the covered route segments of the second travel route, the data volume determined for the specific covered route segment to the mobile device for download via the access point being associated with the specific covered route segment.

14. Apparatus, in particular server system comprising one or more servers, for managing downloading of data to a user's mobile device according to at least one of the preceding claims, the apparatus comprising:
- access point identifying means for identifying a group of access points of the plurality of access points being located along the travel route,
- covered route segment determining means for determining, for each identified access point, an associated covered route segment of the travel route corresponding to the part of the travel route which is covered by the coverage area of the respective access point,
- estimated segment travel time determining means for determining, for each determined covered route segment, an estimated segment travel time of the mobile device along the respective covered route segment of the travel route,
- data volume determining means for determining, for each covered route segment, a data volume to be provided to the mobile device for download when being located on the respective covered route segment on the basis of the estimated segment travel time determined for the respective covered route segment, and
- data volume providing means for providing, when the mobile device is located on a specific covered route segment of the covered route segments, the data volume determined for the specific covered route segment to the mobile device for download via the access point being associated with the specific covered route segment.

15. Computer program product comprising computer program means being configured to cause a server system comprising one or more server computers to execute the steps of the method according to at least one of claims 1 to 13.
